# EUROPÄISCHE PATENTSCHRIFT

(11) **EP 3 767 437 B1**
(45) Veröffentlichungstag und Bekanntmachung des Hinweises auf die Patenterteilung: **01.05.2024**
(21) Anmeldenummer: 20184793.6
(22) Anmeldetag: 08.07.2020
(51) Int. Cl.: G06F 3/01

(54) **BENUTZERSCHNITTSTELLE UND VERFAHREN ZUM ERZEUGEN EINES FEEDBACKS IN EINER BENUTZERSCHNITTSTELLE**
USER INTERFACE AND METHOD FOR PROVIDING FEEDBACK IN A USER INTERFACE
INTERFACE UTILISATEUR ET PROCÉDÉ DE GÉNÉRATION D'UNE RÉTROACTION DANS UNE INTERFACE UTILISATEUR

(30) Priorität: 15.07.2019 DE 102019119155
(43) Veröffentlichungstag der Anmeldung: 20.01.2021
(73) Patentinhaber: Preh GmbH, 97616 Bad Neustadt a.d. Saale (DE)
(72) Erfinder: BODENSTEIN, Tobias, 97616 Salz (DE); DANI, Alain, 96450 Coburg (DE)
(74) Vertreter: Lohmanns, Bernard

(56) Entgegenhaltungen:
- WO-A1-2018/062078
- WO-A1-2018/079339
- US-A1- 2013 335 211
- US-A1- 2018 284 893

## Beschreibung

Die vorliegende Erfindung betrifft eine Benutzerschnittstelle mit einem Bildschirm und einer berührungssensitiven Oberfläche zum Empfang von Berührungen eines Benutzers. Die Erfindung betrifft weiter ein Verfahren zum Erzeugen eines Feedbacks in einer Benutzerschnittstelle.

Ein Eingabegerät mit Bildschirm und transparenter berührungssensitiver Oberfläche mit haptischem Feedback ist beispielsweise aus der JP2007026344A bekannt. Durch einen Vibrationsgenerator wird die berührungssensitive Oberfläche in einer Richtung parallel zu ihrer Oberfläche in Schwingung versetzt.

Aus der US2011/0141052A1 ist eine berührungssensitive Oberfläche für einen Laptop oder ähnliches bekannt, bei der die berührungssensitive Oberfläche durch einen Aktuator zur Erzeugung von haptischem Feedback in Bewegung versetzt wird.

Verschiedene Benutzerschnittstellen sind jeweils aus der US 2019/272058 A1, US 2013/335211 A1 und der US 2018/284893 A1 bekannt. Ein elektromagnetischer Aktuator zur Haptikerzeugung ist aus der WO 2018/079339 A1 bekannt.

Demgegenüber soll die Erzeugung von Feedback in einer Benutzerschnittstelle weiter verbessert werden.

Diese Aufgabe wird gelöst durch eine Benutzerschnittstelle gemäß Patentanspruch 1 und ein Verfahren zum Erzeugen von Feedback in einer Benutzerschnittstelle gemäß Patentanspruch 6. Die abhängigen Ansprüche betreffen vorteilhafte Weiterbildungen der Erfindung.

Die Beschreibung charakterisiert und spezifiziert die Erfindung insbesondere im Zusammenhang mit den Figuren zusätzlich.

Es sei ferner angemerkt, dass eine hierin nachstehend verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die erfindungsgemäße Benutzerschnittstelle weist einen Bildschirm und eine berührungssensitive Oberfläche zum Empfang von Berührungen eines Benutzers auf. Ferner ist ein auf dem Bildschirm angeordnetes, bevorzugt eine Anzeigefläche des Bildschirms überdeckendes, Deckglas vorgesehen, welches teilweise über den Bildschirm übersteht. Bevorzugt ist das Deckglas über eine zwischen der Anzeigefläche und dem Deckglas vorgesehene Klebstoffschicht mit dem Bildschirm stoffschlüssig verbunden. Ein Aktuator steht mit dem Deckglas im überstehenden Bereich in Wirkverbindung. Der Aktuator ist elektromagnetisch und kann in Folge elektrischer Ansteuerung ein Magnetfeld erzeugen, das z. B. magnetische Zugkräfte oder Druckkräfte auf einen metallischen Gegenstand ausüben kann. In einer weiteren bevorzugten Ausführungsform ist der Aktuator in der Lage, die Berühroberfläche in Schwingung zu versetzen und wird als Vibrator bezeichnet. Beispiele für diese Vibratoren sind Piezoaktuatoren, Unwuchtmotoren oder sogenannte Voice Coil Actuators oder Linear-Resonant-Actuators (LRA). Ein Controller, der eingerichtet ist, Berührungen auf der berührungssensitiven Oberfläche zu erkennen, ist weiter eingerichtet, den Aktuator so anzusteuern, dass in dem überstehenden Bereich ein vom Benutzer wahrnehmbares Feedback erzeugt wird. Diese Anordnung des Aktuators zur Erzeugung von Feedback, bietet die Möglichkeit und den Vorteil, das Feedback über das Deckglas an einer Stelle zu erzeugen, an dem dieses nicht auf dem Bildschirm aufliegt.

Erfindungsgemäß ist das Deckglas im überstehenden Bereich allenfalls weich oder gar nicht gelagert, so dass der überstehende Bereich, insbesondere sein äußertes, vom Bildschirm wegweisendes Ende, senkrecht zur berührungssensitiven Oberfläche schwingungsfähig ist. Damit ist der überstehende Bereich ähnlich einer Stimmgabel leicht schwingend anregbar und weist ein hohe Schwingungsamplitude auf, wodurch das Feedback haptisch gut wahrnehmbar ist. Als weich wird beispielsweise eine Lagerung verstanden, deren Elastizitätsmodul geringer ist als das Elastizitätsmodul einer zwischen dem Bildschirm und dem Deckglas vorgesehenen Klebeschicht.

Das Erzeugen von Feedback durch zum Beispiel Vibrationen ist hierdurch einfacher und effizienter möglich. Diese Anordnung bietet weiter den Vorteil, dass Bauraum eingespart werden kann, da der Aktuator auf derselben Seite des Deckglases wie der Bildschirm angeordnet werden kann, jedoch keinen zusätzlichen Bauraum verbraucht.

Ein weiterer Vorteil der Erfindung kann darin bestehen, dass der überstehende Bereich des Deckglases gezielt zur Erzeugung von Feedback angesteuert werden kann. Dies ermöglicht eine gezielte Ansteuerung, welche auch bei größeren Deckgläsern, z. B. im Automobilbereich, effizient und sicher implementiert werden kann.

Erfindungsgemäß ist das Deckglas zumindest teilweise Bestandteil der berührungssensitiven Oberfläche. Die berührungssensitive Oberfläche weist zumindest einen Bereich des Deckglases und einen darauf angeordneten Berührsensor auf. Der Berührsensor kann beispielsweise als Sensorfolie ausgestaltet sein und kann beispielsweise eine Kraftsensorfolie und/oder eine Berührungssensorfolie sein. Eine Kraftsensorfolie weist Sensoren zum Erkennen von Krafteinwirkung auf das Deckglas und damit die Sensorfolie auf. Eine Berührungssensorfolie weist Sensoren zum Erkennen einer Berührung des auf der Sensorfolie angeordneten Deckglases auf. Der Berührsensor kann beispielsweise direkt als leitfähige Beschichtung auf das Deckglas oder ein separates, mit dem Sensorglas verbundenes Sensorglas aufgebracht sein. Beispielsweise besteht die leitfähige Beschichtung aus Indiumzinnoxid (ITO) oder sogenannten Metal-Mesh-Materialien (Metallgitter) oder silberbasierten Stoffe oder leitfähigen Polymeren.

Der Vorteil einer solchen Anordnung ist, dass das Deckglas zugleich als Deckglas des Bildschirms und der berührungssensitiven Oberfläche dienen kann. Erfindungsgemäß sind sowohl Bildschirm als auch virtuelle Tasten einer berührungssensitiven Oberfläche unter demselben Deckglas und damit unter einer einheitlichen, fugenlosen Oberfläche angeordnet. Zugleich ist es möglich, ein haptisches Feedback als Antwort auf eine Betätigung der virtuellen Tasten zu erzeugen, das einfach und preisgünstig realisiert werden kann, und der Haptik einer "echten" mechanischen Taste nahekommt. Eine solches Design kann beispielsweise für eine Anwendung im Automobilbereich erwünscht sein.

Erfindungsgemäß ist der überstehende Bereich des Deckglases, also der Bereich des Deckglases, der über den Bildschirm übersteht, Bestandteil der berührungssensitiven Oberfläche. In einer möglichen Ausführungsform der Erfindung beschränkt sich die berührungssensitive Oberfläche auf diesen überstehenden Bereich des Deckglases, das heißt der Bildschirm kann als Bildschirm ohne Berührungs-Eingabefunktion ausgebildet sein und stellt somit eine besonders günstige Variante dar. In einer anderen Ausführungsform der Erfindung können sowohl der überstehende Bereich des Deckglases als auch zumindest Teile des Deckglases, die auf dem Bildschirm angeordnet sind, als Bestandteil der berührungssensitiven Oberfläche ausgebildet sein. In einer solchen Ausführungsform ist auch der Bildschirm zumindest teilweise als sogenannter Touchscreen ausgebildet.

Erfindungsgemäß ist der Aktuator auf der Seite Deckglases angeordnet, auf der auch der Bildschirm angeordnet ist. Dies hat den Vorteil, dass der Aktuator Bauraum einnehmen kann, der auf derselben Seite wie der Bildschirm liegt. Dies kann Einsparungen im Bauraumbereich mit sich bringen, was insbesondere im Automobilbereich von Vorteil sein kann.

In einer Ausführungsform der Erfindung ist der Bildschirm auf seiner von dem Deckglas abgewandten Seite auf einem Trägerteil befestigt. Das Trägerteil ist auf seiner von dem Bildschirm abgewandten Seite auf einem Rückteil befestigt. Das Rückteil ist beispielsweise Bestandteil des Gehäuses der Benutzerschnittstelle. Bevorzugt ist der Aktuator auf dem Rückteil befestigt. Der Bauraum für den Aktuator ist jedoch so bemessen, dass er eine Bewegung zur Erzeugung des haptischen Feedbacks ausführen kann. Eine Bewegung des Aktuators zur Erzeugung des Feedbacks beträgt beispielsweise maximal 0,5 mm, bevorzugt maximal 0,1 mm.

Erfindungsgemäß ist der überstehende Bereich, mit dem das Deckglas über den Bildschirm übersteht, in einem Randbereich des Deckglases angeordnet und an dem Rückteil nicht oder weich gelagert. Damit ist das Ende des Deckglases, das über den Bildschirm übersteht auf seiner von dem Bildschirm entfernten Seite auf dem Rückteil nicht oder weich gelagert. Dies ermöglicht eine Schwingung des überstehenden Bereiches zur Erzeugung des Feedbacks bei gleichzeitigem Schutz durch das Rückteil, Bevorzugt ist der überstehende Bereich auf zwei gegenüberliegenden Randbereichen des Deckglases realisiert. Dies ermöglicht erfindungsgemäß die Anordnung von sogenannten virtuellen Tasten, die mittels einer berührungssensitiven Oberfläche ausgebildet sind, in einem Randbereich des Deckglases, zum Beispiel rechts und links neben dem Bildschirm, oder zum Beispiel oben über und unten unter dem Bildschirm.

Die Erzeugung von Feedback im überstehenden Bereich des Deckglases erfolgt erfindungsgemäß dadurch, dass der überstehende Bereich des Deckglases in eine Schwingung versetzt wird, deren Auslenkung senkrecht zur Oberfläche des Deckglases verläuft. Eine solche Auslenkung ermöglicht es ebenfalls das für den Benutzer wahrnehmbare Feedback auf den überstehenden Bereich zu beschränken, was eine kostengünstigere Lösung ermöglicht und sich auch positiv auf die Lebensdauer auswirken kann.

Die Schwingung des überstehenden Bereiches des Deckglases kann erfindungsgemäß durch Zugkraft auf den überstehenden Bereich erzeugt werden, wobei ein metallischer Anker mit dem Deckglas verbunden ist und durch Ausüben von Zugkräften durch den Aktuator angezogen wird. Hierdurch ist es möglich, die Schwingung des überstehenden Bereichs des Deckglases zu erzeugen. Es ist ebenfalls möglich Schwingung, durch Druckkraft auf den überstehenden Bereich zu erzeugen. Es kann der Aktuator beispielsweise indirekt über einen auf dem Rückteil befestigten Anker, das Rückteil zu sich heranziehen und somit eine Druckkraft auf den überstehenden Bereich ausüben. Letztere Realisierung bietet Vorteile im Hinblick auf Ausfallsicherheit und Lebensdauer, da Zugkräfte durch Druckkräfte ersetzt werden, was zum Beispiel bei Klebverbindungen von Vorteil ist. Die Schwingung des überstehenden Bereichs des Deckglases kann ebenfalls durch Anbringung eines Vibrators am überstehenden Bereich erreicht werden.

Bevorzugt erfolgt die Erzeugung von Feedback im überstehenden Bereich des Deckglases durch die Übertragung eines einzigen Impulses auf das Deckglas. Dabei ist der Ausdruck "einziger Impuls" so zu verstehen, dass der überwiegende Teil der vom Aktuator auf das Deckglas übertragenen Energie aus der ersten, vom Aktuator erzeugten Halbwelle stammt. Auf diese Art versetzt der Aktuator die Berühroberfläche in eine Schwingung mit ihrer Eigenfrequenz. Es hat sich gezeigt, dass diese Art des Feedbacks vom Benutzer als besonders hochwertig und ähnlich dem einer mechanischen Taste empfunden wird. Ein weiterer Vorteil dieser Ausführungsform besteht darin, dass die Eigenschwingung in einem großen Teil der Berühroberfläche - auch im Bereich des Bildschirms - haptisch wahrnehmbar ist.

In einer bevorzugten Ausführungsform weist die Benutzerschnittstelle ein Deckglas auf, welches an mehreren Seiten des Bildschirms übersteht, wodurch dieses somit mehrere überstehende Teilbereiche ausbildet. Beispielsweise steht das Deckglas an zwei gegenüberliegenden Bereichen des Bildschirmes über und/oder das Deckglas steht an zwei rechtwinklig zueinanderstehenden Seiten des Bildschirms über. In dieser Ausführungsform steht jeweils ein Aktuator mit jeweils einem überstehenden Teilbereich in Wirkverbindung. Diese Ausführungsform bietet den Vorteil, dass beide Aktuatoren gleichzeitig zur Erzeugung eines haptischen Feedbacks angesteuert werden können, insbesondere zur Erzeugung einer Impulsanregung der Berühroberfläche. Es hat sich gezeigt, dass eine gezielte Ansteuerung von mehreren Aktuatoren in unterschiedlichen Teilbereichen zu einer Harmonisierung des haptischen Feedbacks im Bereich des Bildschirms führt.

Ein erfindungsgemäßes Verfahren zum Erzeugen eines Feedbacks in einer Benutzerschnittstelle, wie oben beschrieben, mit einem Bildschirm und einer berührungssensitiven Oberfläche zum Empfang von Berührungen eines Benutzers weist die Schritte auf:
- Erkennen einer Berührung auf der berührungsempfindlichen Oberfläche,
- Ansteuern eines Aktuators, so dass in dem überstehenden Bereich ein vom Benutzer wahrnehmbares Feedback erzeugt wird.

Erfindungsgemäß ist das Deckglas im überstehenden Bereich allenfalls weich oder gar nicht gelagert, so dass der überstehende Bereich, insbesondere sein äußeres, vom Bildschirm wegweisendes Ende, senkrecht zur berührungssensitiven Oberfläche bei Anregung durch den Aktuator schwingt. Damit ist der überstehende Bereich ähnlich einer Stimmgabel leicht schwingend anregbar und weist ein hohe Schwingungsamplitude auf, wodurch das Feedback haptisch gut wahrnehmbar ist. Als weich wird beispielsweise eine Lagerung verstanden, deren Elastizitätsmodul geringer ist als das Elastizitätsmodul der zwischen dem Bildschirm und dem Deckglas vorgesehenen Klebeschicht.

Beispielsweise ist der überstehende Bereich in einem Randbereich des Deckglases angeordnet und das vom Benutzer wahrnehmbare Feedback wird erzeugt, indem ein Aktuator den überstehenden Bereich des Deckglases in eine Schwingung versetzt, wobei das Deckglas in Richtung seiner Flächennormalen ausgelenkt wird.

Bevorzugt wird das vom Benutzer wahrnehmbare Feedback erzeugt, indem ein Aktuator im überstehenden Bereich des Deckglases einen Impuls auf das Deckglas überträgt.

In einer bevorzugten Ausführungsform des Verfahrens wird das vom Benutzer wahrnehmbare Feedback durch mehrere Aktuatoren erzeugt, indem die Aktuatoren die überstehenden Teilbereiche des Deckglases in Schwingung versetzen, wobei jeweils der überstehende Teilbereich in Schwingung versetzt wird, auf dem die Berührung erkannt wurde.

In einer besonders bevorzugten Ausführungsform des Verfahrens wird das vom Benutzer wahrnehmbare Feedback durch mehrere Aktuatoren erzeugt, indem die Aktuatoren in den überstehenden Teilbereichen des Deckglases jeweils einen einzigen Impuls auf das Deckglas übertragen, wobei der einzige Impuls jeweils auf den überstehenden Teilbereich übertragen wird, auf dem die Berührung erkannt wurde.

In einer Ausführungsform des Verfahrens ist der überstehende Bereich des Deckglases Bestandteil der berührungssensitiven Oberfläche. Die berührungssensitive Oberfläche weist dabei weiter eine Sensorfolie, insbesondere eine Kraftsensorfolie und/oder eine Berührungssensorfolie, auf.

Weitere Merkmale und Vorteile der Erfindung ergeben sich aus der folgenden Beschreibung von nicht einschränkend zu verstehenden Ausführungsbeispielen der Erfindung, die im Folgenden unter Bezugnahme auf die Zeichnung näher erläutert wird. In der Zeichnung bezeichnen gleiche Bezugszeichen gleiche oder gleich wirkende Elemente. In dieser Zeichnung zeigen schematisch:
Fig. 1 Beispielhaft eine Benutzerschnittstelle für die Verwendung in einem Fahrzeug;
Fig. 2 einen schematischen Längsschnitt durch eine beispielhafte Benutzerschnittstelle;
Fig.3 eine schematische Explosionsdarstellung von Bestandteilen einer Benutzerschnittstelle.

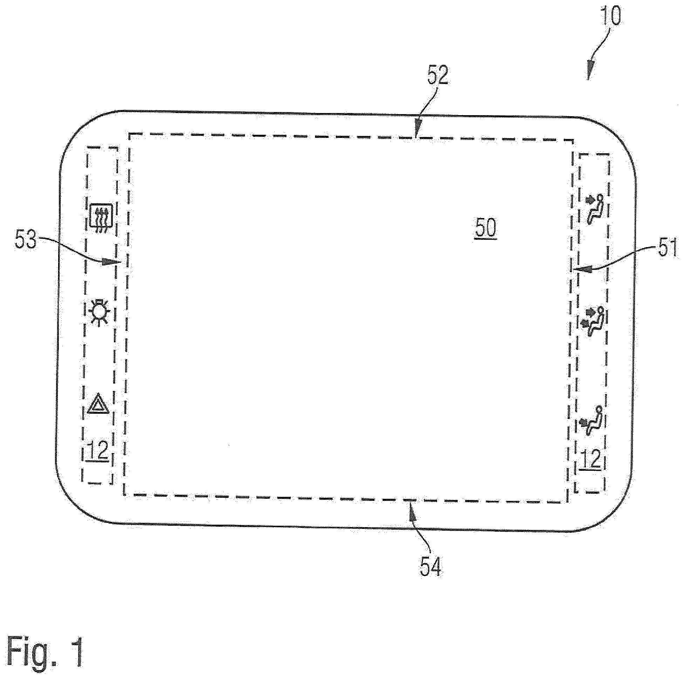

Figur 1 zeigt eine Ansicht von vorne eines Beispiels einer Benutzerschnittstelle 10. Die Benutzerschnittstelle 10 umfasst Bedienelemente, die zum Beispiel hardwaremäßig als Knöpfe ausgeführt sind. Die Benutzerschnittstelle 10 weist weiter einen Bildschirm 50 mit Seiten 51, 52, 53 und 54 und eine berührungsempfindliche Oberfläche 12 auf. In diesem Beispiel umfasst die berührungsempfindliche Oberfläche 12 zwei Teile, die jeweils als Streifen auf der rechten 51 und linken Seite 52 des Bildschirms 50 angeordnet sind.

Auf der berührungsempfindlichen Oberfläche 12 sind sogenannte Softkeys angeordnet. Softkeys sind Bedienelemente, die unter Mitwirkung der berührungsempfindlichen Oberfläche 12 realisiert werden. Die berührungsempfindliche Oberfläche 12 empfängt eine Berührung des Nutzers.

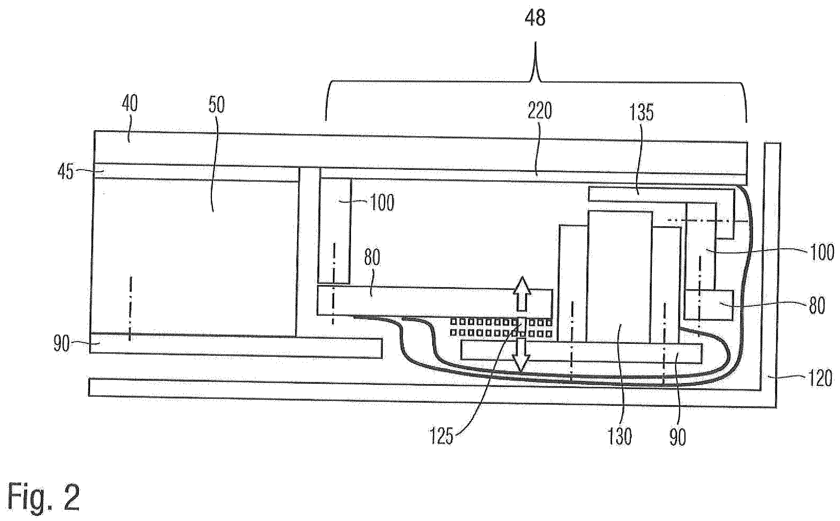

In Figur 2 ist schematisch ein Längsschnitt durch ein Beispiel einer Benutzerschnittstelle 10 dargestellt. Auf den Bildschirm 50 ist ein Deckglas 40 durch eine transparente, optisch klare, Klebeschicht 45 aufgeklebt. Der Bildschirm 50 ist auf seiner von dem Deckglas 40 abgewandten Seite auf einem Trägerteil 90 angebracht. Das Trägerteil 90 besteht zum Beispiel aus Kunststoff, Blech oder Druckguss, z. B. einer Mg-Druckgusslegierung. Auf der Rückseite des Trägerteils 90 ist ein Rückteil 120 angeordnet, das Bestandteil des Gehäuses der Benutzerschnittstelle 10 ist. Auf der Leiterplatte 80 sind vorteilhafterweise LEDs, Kraftsensoren und ein Controller angeordnet, der die berührungsempfindliche Oberfläche 12 steuert und bevorzugt auch den Aktuator 130 ansteuert, um das haptische Feedback für einen Nutzer zu erzeugen. Der Aktuator 130 kann auf dem Rückteil 120 befestigt sein und fest mit dem Trägerteil 90 verbunden sein. Die berührungsempfindliche Oberfläche 12 weist einen Bereich des Deckglases 40 sowie eine auf das Deckglas 40 aufgeklebte Sensorfolie 220 auf.

Der Aktuator 130 ist bevorzugt an dem Rückteil 120 befestigt. Der Aktuator 130 ist an dem Trägerteil 90 befestigt. Der Pfeil 125 gibt die Bewegungsrichtung des Aktuators 130 an. Durch eine Bewegung in Richtung des Pfeiles 125 kann der Aktuator 130 eine Schwingung des über den Bildschirm 50 überstehenden Bereiches 48 des Deckglases 40 bewirken. Die Bewegung des Aktuators 130 beträgt dabei vorteilhafter Weise maximal 0,1 mm. Die Leiterplatte 80 ist an einem Leiterplattenhalter 100 befestigt, z. B. verschraubt. Der Leiterplattenhalter ist bevorzugt aus Kunststoff und dient als Halter und Abstandshalter für die Leiterplatte 80. Der Leiterplattenhalter 100 kann mit der Sensorfolie 220 oder mit dem Deckglas 40 verklebt sein. An anderer Stelle kann der Leiterplattenhalter 100 mit einem Anker 135 verklebt sein. Der Anker 135 besteht aus Metall und ist mit der Sensorfolie 220 oder mit dem Deckglas 40 verklebt.

In einer alternativen - nicht dargestellten - Ausführungsform kann der Leiterplattenhalter 100 auch mit dem Trägerteil 90 verbunden sein. Dann kann die Verbindung mit dem Deckglas 40 entfallen.

Wird über die Sensorfolie 220 eine Berührung der berührungsempfindlichen Oberfläche durch den Controller erkannt, so steuert der Controller den Aktuator 130 an. Wird der Aktuator 130 angesteuert, so entwickelt er Zugkräfte und zieht den Anker 135 gemeinsam mit dem Deckglas 40 an. Hierdurch wird der über den Bildschirm 50 überstehende Bereich des Deckglases 40 in Schwingung versetzt. Diese Schwingung kann von einem Nutzer als Feedback auf seine Berührung der berührungsempfindlichen Oberfläche 12, z. B. der Softkeys von Figur 1, wahrgenommen werden.

In einer anderen, nicht dargestellten, Ausführungsform kann ein Anker umgekehrt eingebaut sein, d. h. auf der anderen Seite des Aktuators 130 in der Nähe des Rückteils 120 angeordnet sein. Wenn der Aktuator 130 in dieser Ausführungsform nach Ansteuerung Zugkräfte entwickelt, zieht er den Anker, der an dem Rückteil 120 befestigt ist, zu sich heran. Über den Leiterplattenhalter 100 können dann Druckkräfte auf das Deckglas 40 ausgeübt werden, und dieses so in Schwingung versetzt werden. Diese Ausführungsform hat den Vorteil, dass Druckkräfte auf das Deckglas 40 wirken was besonders bei Klebeverbindungen Vorteile haben kann.

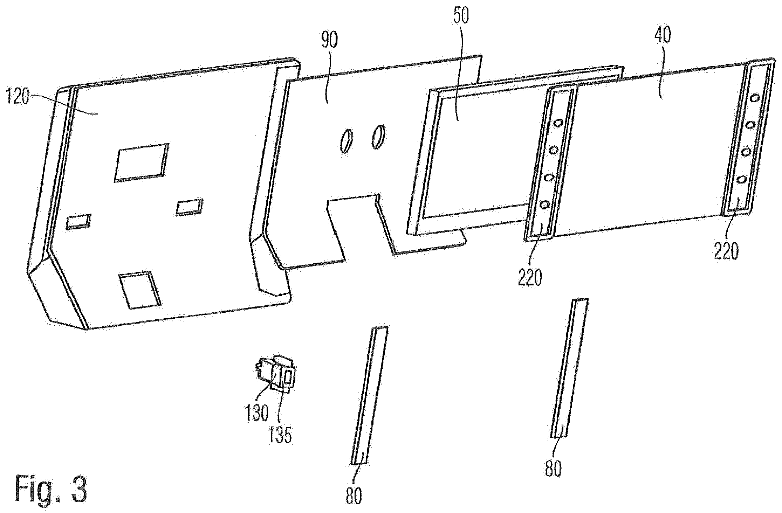

In Figur 3 ist ein Beispiel einer Benutzerschnittstelle in Explosionsdarstellung gezeigt. Dargestellt ist ein Beispiel eines Ankers 135 mit einem Aktuator 130. Gezeigt sind ebenfalls die zwei Teile der Leiterplatte 80 die jeweils einem Teil der Sensorfolie 220 zugeordnet sind. Ebenfalls dargestellt ist das Deckglas 40 und der Bildschirm 50 mit seinem Trägerteil 90 und dem Rückteil 120. Das Trägerteil 90 ist beispielsweise aus einer zwischen 0,5 mm und 2 mm dicken, bevorzugt ca. 1mm dicken, Metallplatte gefertigt. Der Bildschirm 50 ist dabei bevorzugt auf das Trägerteil 90 aufgeschraubt. Das Rückteil 120 ist bevorzugt auf dem Trägerteil 90 befestigt, z. B. mit diesem verschraubt.

Das Deckglas besteht z. B. aus Kalk-Natron-Glas oder einem anderen Glaswerkstoff, z. B. Alkalimetallsilikat. Bevorzugt ist das Deckglas aus einem kratzresistenten und dünnen Werkstoff, so dass das Deckglas zwischen 0,2 und 1 mm, bevorzugt zwischen 0,3mm und 0,5 mm, dick ist.

Diese Beschreibung beschreibt mehrere Ausführungsformen.

Die beschriebenen Ausführungsformen sind jedoch nicht so zu verstehen, dass sie notwendigerweise die Erfindung definieren. Die beschriebenen Ausführungsformen definieren nur dann die Erfindung, wenn sie in den Umfang der beigefügten Ansprüche fallen. Daher ist der Schutzumfang der vorliegenden Erfindung ausschließlich durch die beigefügten Ansprüche definiert.

## Patentansprüche

1. Benutzerschnittstelle (10), aufweisend einen Bildschirm (50) und eine berührungssensitive Oberfläche (12) zum Empfang von Berührungen eines Benutzers,
wobei ein Deckglas (40) auf dem Bildschirm (50) angeordnet ist und teilweise mit einem überstehenden Bereich (48) über den Bildschirm (50) übersteht und das Deckglas (40) im überstehenden Bereich (48) weich oder gar nicht gelagert ist, sowie einen elektromagnetischen Aktuator (130), der mit dem Deckglas (40) im überstehenden Bereich (48) in Wirkverbindung steht, wobei und der elektromagnetische Aktuator (130) auf der Seite des Deckglases (40) angeordnet ist, auf der der Bildschirm (50) angeordnet ist, sowie einen Controller, der eingerichtet ist, Berührungen auf der berührungssensitiven Oberfläche (12) zu erkennen und den elektromagnetischen Aktuator (130) nachfolgend so anzusteuern, dass in dem überstehenden Bereich (48) ein vom Benutzer wahrnehmbares Feedback erzeugt wird, wobei das für den Benutzer wahrnehmbare Feedback auf den überstehenden Bereich beschränkt ist,
wobei im überstehenden Bereich (48) das Deckglas (40) weich oder gar nicht gelagert ist, so dass ein freies, vom Bildschirm (50) wegweisendes Ende des überstehenden Bereichs, senkrecht zur berührungssensitiven Oberfläche (12) schwingungsfähig ist um das vom Benutzer wahrnehmbare Feedback zu erzeugen nachdem eine Berührung auf der berührungsempfindlichen Oberfläche (12) erkannt wurde;
wobei eine Schwingung durch Zugkraft auf den überstehenden Bereich (48) erzeugt wird und ein metallischer Anker (135) mit dem Deckglas (40) verbunden ist, der durch Ausüben von Zugkräften durch den elektromagnetischen Aktuator (130) angezogen wird und wobei der überstehende Bereich (48) des Deckglases (40) Bestandteil der berührungssensitiven Oberfläche (12) ist und Funktionen anzeigt, so dass der Bildschirm (50) unter dem gemeinsamen Deckglas (40) angeordnet ist.

2. Benutzerschnittstelle nach Anspruch 1, wobei das Deckglas (40) und der Bildschirm (50) über eine transparente Klebeschicht (45) miteinander verbunden sind.

3. Benutzerschnittstelle nach einem der vorhergehenden Ansprüche, wobei der Bildschirm (50) auf seiner von dem Deckglas (40) abgewandten Seite auf einem Trägerteil (90) befestigt ist und das Trägerteil (90) auf seiner von dem Bildschirm (50) abgewandten Seite auf einem Rückteil (120) befestigt ist.

4. Benutzerschnittstelle nach einem der vorhergehenden Ansprüche, wobei der elektromagnetische Aktuator (130) eingerichtet ist, das vom Benutzer wahrnehmbare Feedback zu erzeugen, in dem der elektromagnetische Aktuator im überstehenden Bereich (48) einen einzigen Impuls auf das Deckglas überträgt.

5. Benutzerschnittstelle nach einem der vorhergehenden Ansprüche, wobei der überstehende Bereich (48) des Deckglases (40) aus mehreren Teilbereichen besteht, die jeweils an verschiedenen Seiten des Bildschirms (50) überstehen, und in jedem Teilbereich ein elektromagnetischer Aktuator (130) mit dem Deckglas (40) in Wirkverbindung steht.

6. Verfahren zum Erzeugen eines Feedbacks in einer Benutzerschnittstelle (10), wobei die Benutzerschnittstelle (10) aufweist:
• einen Bildschirm (50) und eine berührungssensitive Oberfläche (12) zum Empfang von Berührungen eines Benutzers, wobei ein Deckglas (40) auf dem Bildschirm (50) angeordnet ist und teilweise mit einem überstehenden Bereich (48) über den Bildschirm (50) übersteht, sowie
• einen elektromagnetischen Aktuator (130), der mit dem Deckglas (40) im überstehenden Bereich (48) in Wirkverbindung steht, und der elektromagnetische Aktuator (130) auf der Seite des Deckglases (40) angeordnet ist, auf der der Bildschirm (50) angeordnet ist, sowie
• einen Controller, der eingerichtet ist, Berührungen auf der berührungssensitiven Oberfläche (12) zu erkennen und den elektromagnetischen Aktuator (130) so anzusteuern, dass in dem überstehenden Bereich (48) ein vom Benutzer wahrnehmbares Feedback erzeugt wird, wobei das für den Benutzer wahrnehmbare Feedback auf den überstehenden Bereich beschränkt ist, und
wobei das Verfahren die Schritte aufweist:
• Erkennen einer Berührung auf der berührungssensitiven Oberfläche (12),
• Ansteuern des elektromagnetischen Aktuators (130), so dass in dem überstehenden Bereich (48) ein vom Benutzer wahrnehmbares Feedback erzeugt wird,
wobei das Deckglas (40) im überstehenden Bereich (48) weich oder gar nicht gelagert ist, wobei ein freies, vom Bildschirm (50) wegweisendes Ende des überstehenden Bereichs (48), senkrecht zur berührungssensitiven Oberfläche (12) schwingt, um das vom Benutzer wahrnehmbare Feedback zu erzeugen;
wobei eine Schwingung durch Zugkraft auf den überstehenden Bereich (48) erzeugt wird und ein metallischer Anker (135) mit dem Deckglas (40) verbunden ist, der durch Ausüben von Zugkräften durch den elektromagnetischen Aktuator (130) angezogen wird und wobei der überstehende Bereich (48) des Deckglases (40) Bestandteil der berührungssensitiven Oberfläche (12) ist und Funktionen anzeigt, so dass der Bildschirm (50) unter dem gemeinsamen Deckglas (40) angeordnet ist.

7. Verfahren nach Anspruch 6, wobei das vom Benutzer wahrnehmbare Feedback erzeugt wird, indem der elektromagnetische Aktuator (130) auf den überstehenden Bereich (48) des Deckglases (40) einen einzigen Impuls überträgt.

8. Verfahren nach einem der Ansprüche 6 oder 7, wobei das Deckglas (40) und der Bildschirm (50) über eine transparente Klebeschicht (45) miteinander verbunden sind.

9. Verfahren nach einem der Ansprüche 6 bis 8, wobei der überstehende Bereich (48) des Deckglases (40) aus mehreren Teilbereichen besteht, die jeweils an verschiedenen Seiten des Bildschirms (50) überstehen, und in jedem Teilbereich ein elektromagnetischer Aktuator (130) mit dem Deckglas (40) in Wirkverbindung steht, wobei das Verfahren die Schritte aufweist:
- Erkennen einer Berührung auf einem Teilbereich;
- Ansteuern des elektromagnetischen Aktuators (130), der mit dem Teilbereich in Wirkverbindung steht, auf dem die Berührung erkannt wurde.

## Claims

1. User interface (10), having a screen (50) and a touch-sensitive surface (12) for receiving touches by a user,
wherein a cover glass (40) is arranged on the screen (50) and partially projects, by way of a protruding region (48), beyond the screen (50) and the cover glass (40) is mounted softly or not at all in the projecting region (48), and also
an electromagnetic actuator (130), which is operatively connected to the cover glass (40) in the projecting region (48), wherein the electromagnetic actuator (130) is arranged on that side of the cover glass (40) on which the screen (50) is arranged, and also
a controller, which is designed to identify touches on the touch-sensitive surface (12) and to subsequently actuate the electromagnetic actuator (130) such that feedback, which can be perceived, by the user is generated in the projecting region (48), wherein the feedback, which can be perceived by the user, is limited to the projecting region, wherein the cover glass (40) is mounted softly or not at all in the projecting region (48), so that a free end of the projecting region, the free end facing away from the screen (50), can vibrate perpendicularly to the touch-sensitive surface (12) in order to generate the feedback, which can be perceived by the user, once a touch on the touch-sensitive surface (12) has been identified, wherein a vibration is generated by tensile force on the projecting region (48) and a metal anchor (135) is connected to the cover glass (40), the metal anchor being attracted by the electromagnetic actuator (130) due to tensile forces being exerted and wherein the projecting region (48) of the cover glass (40) is a constituent part of the touch-sensitive surface (12) and displays functions, so that the screen (50) is arranged beneath the common cover glass (40).

2. User interface according to Claim 1, wherein the cover glass (40) and the screen (50) are connected to each other by means of a transparent adhesive layer (45).

3. User interface according to either of the preceding claims, wherein the screen (50), on its side that is averted from the cover glass (40), is secured on a carrier part (90) and the carrier part (90), on its side that is averted from the screen (50), is secured on a rear part (120).

4. User interface according to any of the preceding claims, wherein the electromagnetic actuator (130) is designed to generate the feedback, which can be perceived by the user, by way of the electromagnetic actuator transmitting a single pulse onto the cover glass in the projecting region (48).

5. User interface according to any of the preceding claims, wherein the projecting region (48) of the cover glass (40) consists of a plurality of subregions, which each project from different sides of the screen (50), and an electromagnetic actuator (130) is operatively connected to the cover glass (40) in each subregion.

6. Method for generating feedback in a user interface (10), wherein the user interface (10) has:
• a screen (50) and a touch-sensitive surface (12) for receiving touches by a user, wherein a cover glass (40) is arranged on the screen (50) and partially projects, by way of a projecting region (48), beyond the screen (50), and also
• an electromagnetic actuator (130), which is operatively connected to the cover glass (40) in the projecting region (48), and the electromagnetic actuator (130) is arranged on that side of the cover glass (40) on which the screen (50) is arranged, and also
• a controller, which is designed to identify touches on the touch-sensitive surface (12) and to actuate the electromagnetic actuator (130) such that feedback, which can be perceived by the user, is generated in the projecting region (48), wherein the feedback, which can be perceived by the user, is limited to the projecting region,
and wherein the method comprises the steps of:
• identifying a touch on the touch-sensitive surface (12),
• actuating the electromagnetic actuator (130), so that feedback, which can be perceived by the user, is generated in the projecting region (48),
wherein the cover glass (40) is mounted softly or not at all in the projecting region (48), wherein a free end of the projecting region (48), the free end facing away from the screen (50), vibrates perpendicularly to the touch-sensitive surface (12) in order to generate the feedback, which can be perceived by the user;
wherein a vibration is generated by tensile force on the projecting region (48) and a metal anchor (135) is connected to the cover glass (40), the metal anchor being attracted by the electromagnetic actuator (130) due to tensile forces being exerted and wherein the projecting region (48) of the cover glass (40) is a constituent part of the touch-sensitive surface (12) and displays functions, so that the screen (50) is arranged beneath the common cover glass (40).

7. Method according to Claim 6, wherein the feedback, which can be perceived by the user, is generated by way of the electromagnetic actuator (130) transmitting a single pulse onto the projecting region (48) of the cover glass (40).

8. Method according to either of Claims 6 and 7, wherein the cover glass (40) and the screen (50) are connected to each other by means of a transparent adhesive layer (45).

9. Method according to any of Claims 6 to 8, wherein the projecting region (48) of the cover glass (40) consists of a plurality of subregions, which each project from different sides of the screen (50), and an electromagnetic actuator (130) is operatively connected to the cover glass (40) in each subregion, wherein the method comprises the steps of:
- identifying a touch on a subregion;
- actuating the electromagnetic actuator (130), which is operatively connected to the subregion on which the touch was identified.

## Revendications

1. Interface utilisateur (10) comportant un écran (50) et une surface tactile (12) destinée à recevoir des contacts tactiles d'un utilisateur, un verre de recouvrement (40) étant disposé sur l'écran (50) et dépassant partiellement de l'écran (50) avec une zone saillante (48) et le verre de recouvrement (40) étant logé de manière souple ou pas du tout dans la zone saillante (48), et un actionneur électromagnétique (130) qui est relié fonctionnellement au verre de recouvrement (40) dans la zone saillante (48), l'actionneur électromagnétique (130) étant disposé sur le côté du verre de recouvrement (40) sur lequel l'écran (50) est disposé, ainsi qu'un contrôleur qui est conçu pour détecter des contacts tactiles sur la surface tactile (12), et commander ensuite l'actionneur électromagnétique (130) de telle sorte qu'une rétroaction perceptible par l'utilisateur soit générée dans la zone saillante (48), la rétroaction perceptible par l'utilisateur étant limitée à la zone saillante,
le verre de recouvrement (40) étant logé de manière souple ou pas du tout dans la zone saillante (48) de telle sorte qu'une extrémité libre, opposée à l'écran (50), de la zone saillante soit capable d'osciller perpendiculairement à la surface tactile (12) afin de produire la rétroaction perceptible par l'utilisateur après qu'un contact tactile a été détecté sur la surface tactile (12) ;
une oscillation étant générée par une force de traction sur la zone saillante (48) et un induit métallique (135) étant relié au verre de recouvrement (40), lequel induit est attiré par des forces de traction exercées par l'actionneur électromagnétique (130) et la zone saillante (48) du verre de recouvrement (40) faisant partie de la surface tactile (12) et indiquant des fonctions de sorte que l'écran (50) soit disposé sous le verre de recouvrement commun (40).

2. Interface utilisateur selon la revendication 1, le verre de recouvrement (40) et l'écran (50) étant reliés l'un à l'autre par le biais d'une couche adhésive transparente (45).

3. Interface utilisateur selon l'une des revendications précédentes, l'écran (50) étant fixé sur une partie de support (90) sur son côté opposé au verre de recouvrement (40) et la partie de support (90) étant fixée sur une partie arrière (120) sur son côté opposé à l'écran (50).

4. Interface utilisateur selon l'une des revendications précédentes, l'actionneur électromagnétique (130) étant conçu pour générer la rétroaction perceptible par l'utilisateur, du fait que l'actionneur électromagnétique transmet une seule impulsion au verre de recouvrement dans la zone saillante (48).

5. Interface utilisateur selon l'une des revendications précédentes, la zone saillante (48) du verre de recouvrement (40) comprenant plusieurs sous-zones qui font chacune saillie de différents côtés de l'écran (50), et dans chaque sous-zone un actionneur électromagnétique (130) étant relié fonctionnellement au verre de recouvrement (40).

6. Procédé de génération d'une rétroaction dans une interface utilisateur (10), l'interface utilisateur (10) comportant :
• un écran (50) et une surface tactile (12) destinée à recevoir des contacts tactiles d'un utilisateur, un verre de recouvrement (40) étant disposé sur l'écran (50) et faisant saillie partiellement de l'écran (50) avec une zone saillante (48), et
• un actionneur électromagnétique (130) qui est relié fonctionnellement au verre de recouvrement (40) dans la zone saillante (48), et l'actionneur électromagnétique (130) étant disposé sur le côté du verre de recouvrement (40) sur lequel le un écran (50) est disposé, et
• un contrôleur qui est conçu pour détecter des contacts tactiles sur la surface tactile (12) et pour commander l'actionneur électromagnétique (130) de telle sorte qu'une rétroaction perceptible par l'utilisateur soit générée dans la zone saillante (48), la rétroaction perceptible par l'utilisateur étant limitée à la zone saillante, et
le procédé comprenant les étapes suivantes :
• détecter un contact tactile sur la surface tactile (12),
• commander l'actionneur électromagnétique (130) de manière à générer une rétroaction perceptible par l'utilisateur dans la zone saillante (48),
le verre de recouvrement (40) étant logé de manière souple ou pas du tout dans la zone saillante (48), une extrémité libre, opposée à l'écran (50), de la zone saillante (48) oscillant perpendiculairement à la surface tactile (12) afin de générer la rétraction perceptible par l'utilisateur ;
une oscillation étant générée par une force de traction exercée sur la zone saillante (48) et un induit métallique (135) étant relié au verre de recouvrement (40), lequel induit est attiré par des forces de traction exercées par l'actionneur électromagnétique (130) et la zone saillante (48) du verre de recouvrement (40) faisant partie de la surface tactile (12) et affichant des fonctions de sorte que l'écran (50) soit disposé sous le verre de recouvrement commun (40).

7. Procédé selon la revendication 6, la rétroaction perceptible par l'utilisateur étant générée du fait que l'actionneur électromagnétique (130) transmet une seule impulsion à la zone saillante (48) du verre de recouvrement (40).

8. Procédé selon l'une des revendications 6 ou 7, le verre de recouvrement (40) et l'écran (50) étant reliés l'un à l'autre par le biais d'une couche adhésive transparente (45).

9. Procédé selon l'une des revendications 6 à 8, la zone saillante (48) du verre de recouvrement (40) comprenant plusieurs sous-zones qui font chacune saillie de différents côtés de l'écran (50), et dans chaque sous-zone un actionneur électromagnétique (130) étant relié fonctionnellement au verre de recouvrement (40), le procédé comprenant les étapes suivantes :
- détecter un contact tactile sur une sous-zone ;
- commander l'actionneur électromagnétique (130) qui est relié fonctionnellement à la sous-zone sur laquelle le contact tactile a été détecté.
